# EUROPÄISCHE PATENTANMELDUNG

(11) **EP 2 725 671 A2**
(43) Veröffentlichungstag der Anmeldung: **30.04.2014**
(21) Anmeldenummer: 13190221.5
(22) Anmeldetag: 25.10.2013
(51) Int. Cl.: H02G 15/013

(54) **Spritzkörper und Verfahren zu seiner Herstellung**

(30) Priorität: 26.10.2012 DE 102012110262
(71) Anmelder: Ditter Plastic GmbH + Co. KG, 77716 Haslach i.K. (DE)
(72) Erfinder: Neumaier, Burkhard, 77716 Haslach i. K. (DE)
(74) Vertreter: Alber, Norbert

(57) **Zusammenfassung**

Bei einem Spritzkörper (**1**) aus Kunststoff, aus dem eine oder mehrere elektrische Leitungen **(3)** austreten sollen, werden diese nicht beim Spritzen des Spritzkörpers **(1)** direkt umspritzt. Stattdessen wird ein in die Spritzform vorher einzulegender Innenkörper **(2)** vorgefertigt, beispielsweise ebenfalls im Spritzguss-Verfahren, in den danach die elektrischen Leitungen **(3)** eingelegt werden. Der Innenkörper **(2)** mit eingelegten Leitungen **(3)** wird dann in die Spritzform eingelegt, wobei der Innenkörper **(2)** stirnseitig über den außen umgebenden Spritzkörper **(1)** vorsteht, so dass die Spritzform nur gegenüber dem Außenumfang des Innenkörpers **(2)** und nicht gegenüber den elastischen elektrischen Leitungen **(3)** selbst abdichten muss. Auch ein Anschmelzen der Isolierung der elektrischen Leitungen **(3)** durch das Spritzmaterial für den Spritzkörper **(1)** kann dadurch vermieden werden.

## Beschreibung

### I. Anwendungsgebiet

Die Erfindung betrifft einen Spritzkörper, aus dem wenigstens eine elektrische Leitung herausgeführt ist.

### II. Technischer Hintergrund

Bei einer Vielzahl von Anwendungen ist es notwendig, im Inneren eines Spritzkörpers entweder einen elektrischen Stromanschluss zur Verfügung zu stellen und von dort dementsprechend eine elektrische Leitung aus dem Spritzkörper herauszuführen, oder auch eine elektrische Leitung durch den Spritzkörper hindurchzuführen, so dass mindestens zwei Austritts-Stellen der elektrischen Leitung aus dem Spritzkörper bestehen.

Da in aller Regel nicht nur eine elektrische Leitung sondern zwei oder gar mehr elektrische Leitungen herausgeführt werden müssen, sind die einzelnen elektrischen Leitungen mit der üblichen elektrischen Isolierung aus Kunststoff umgeben, die auch nicht beschädigt werden darf, da es sonst zu Kurzschlüssen zwischen den zwei oder mehr elektrischen Leitern kommen kann.

Da der Spritzkörper in aller Regel aus Kunststoff besteht, und damit beim Spritzen das Rohmaterial - abhängig vom verwendeten Kunststoff - mit Temperaturen von beispielsweise **250**°C bis **300**°C eingespritzt wird, und der Schmelzpunkt der Kunststoffisolierung der elektrischen Leiter ebenfalls in diesem Temperaturbereich oder gar darunter liegt, besteht die Gefahr, dass beim direkten Umspritzen der elektrischen Leitungen die Kunststoff-Isolierung soweit erwärmt wird, dass sie ihrem Isolationszweck nicht mehr genügt und sich die beiden metallischen elektrischen Leiter zu sehr oder vollständig aneinander annähern.

Ein weiteres Problem beim direkten Umspritzen der elektrischen Leiter besteht darin, dass die elektrischen Leiter innerhalb der Spritzform definiert positioniert werden müssen, damit die elektrischen Leiter nicht versehentlich an den Rand der Spritzform gedrückt werden und dann auf einer Seite nur noch von einer sehr dünnen, nicht ausreichend schützenden Schicht des Spritzkörpers umgeben sind. Dies erreicht man in der Regel durch entsprechende Schieber oder Vorsprünge der Spritzform, die jedoch wiederum Hohlräume, z.B. Sacklöcher, in dem Spritzkörper erzeugen, die bis zu den elektrischen Leitungen heranreichen.

Man hat dies versucht zu vermeiden, indem man die elektrischen Leitungen zunächst in eine erste Spritzform eingelegt hat, und mit einem vom Querschnitt her kleinen Innenkörper umspritzt hat, und diesen Innenkörper mit den eingespritzten elektrischen Leitungen dann in eine größere Spritzform eingelegt und mit dem eigentlichen Spritzkörper umspritzt hat.

Dadurch kann zwar sichergestellt werden, dass die elektrischen Leitungen nicht am Rande des Spritzkörpers liegen, jedoch wird das Problem des Anschmelzens der elektrischen Isolierung der Leitungen nicht gelöst.

Ein weiteres Problem beim direkten Einspritzen von einem elektrischen Leiter, der aus einem Spritzkörper herausgeführt ist, ist die Abdichtung der Austrittsstelle der elektrischen Leitung aus der Spritzform beim Spritzen:
Da der isolierende Kunststoff-Mantel der elektrischen Leitung elastisch und auch etwas komprimierbar ist, kann die elektrische Leitung am Austritt aus der Spritzform nicht so dicht abgedichtet werden, dass beim Spritzen aufgrund des hohen Einspritzdruckes nicht doch Kunststoff neben der elektrischen Leitung an dessen Austritts-Stelle aus der Form herausgepresst wird. Dies ergibt eine sehr unschöne Optik des fertigen Spritzkörpers, und die ausgetretenen Kunststoff-Nasen müssen, ggf. aufwendig, meist von Hand, anschließend entfernt werden.

### III. Darstellung der Erfindung

### a) Technische Aufgabe

Es ist daher die Aufgabe gemäß der Erfindung, einen Spritzguss-Körper und ein Verfahren zu seiner Herstellung zu schaffen, der trotz einer herausgeführten elektrischen Leitung einfach und reproduzierbar hergestellt werden kann ohne die Gefahr einer Beschädigung der Isolierung des elektrischen Leiters und ohne die Gefahr eines Kunststoff-Austrittes aus der Spritzform an der Kabel-Austritts-Stelle.

### b) Lösung der Aufgabe

Diese Aufgabe wird durch die Merkmale der Ansprüche **1** und **14** gelöst. Vorteilhafte Ausführungsformen ergeben sich aus den Unteransprüchen.

Für den erfindungsgemäßen Spritzkörper wird diese Aufgabe gelöst, indem der Spritzkörper auf einen Innenkörper aufgespritzt ist und diesen vorzugsweise vom Querschnitt her allseitig umgibt und in diesem Innenkörper die elektrische Leitung eingelegt ist.

Diese elektrische Leitung ist dabei von dem Innenkörper nicht umspritzt, sondern es handelt sich um einen vorgefertigten Innenkörper, der einen entsprechenden Innenraum aufweist, in den die Leitung eingelegt ist. Diese elektrische Leitung verlässt den Innenkörper an wenigstens einem Leitungs-austritt und zumindest mit diesem Leitungsaustritt steht der Innenkörper aus dem Spritzkörper vor und/oder ist die Leitung im Querschnitt betrachtet vollständig vom Innenkörper umgeben.

Wie der Innenkörper konstruktiv gestaltet ist, ist prinzipiell egal, solange das Einbringen der elektrischen Leitung in den vorgefertigten Innenkörper möglich ist.

Vorzugsweise besteht der Innenkörper deshalb aus zwei separaten oder über ein Filmscharnier miteinander verbundene Halbschalen, die gegeneinander gelegt und z.B. durch entsprechende Rastvorrichtungen gegeneinander verrastet werden können, nachdem die elektrische Leitung eingelegt wurde.

Dadurch muss am Leitungsaustritt die Spritzform für den äußeren Spritzkörper nicht gegenüber der elektrischen Leitung, sondern lediglich gegenüber dem Außenumfang des daraus vorstehenden Innenkörpers abgedichtet werden. Der Innenkörper kann zumindest an dieser Austrittsstelle aus dem Spritzkörper jedoch relativ problemlos in seiner Querschnittsrichtung so stabil ausgebildet werden, dass kein Spritzmaterial zwischen Spritzform und Innenkörper austreten kann. Zu diesem Zweck ist der Innenkörper vorzugsweise an der Austrittsstelle auch so stabil ausgebildet, dass er sich nicht auf der innenliegenden und an dieser Stelle herausgeführten elektrischen Leitung abstützen muss.

Der Innenkörper kann natürlich auch an Stellen aus dem Spritzkörper vorstehen, an denen keine elektrische Leitung austritt.

Auch das Problem des Anschmelzens der elektrischen Isolierung der elektrischen Leitung kann dadurch gelöst werden, denn wenn der Innenkörper die elektrische Leitung überall dicht umgibt, kommt das beim Herstellen des Spritzkörpers eingespritzte Spritzmaterial in seinem flüssigen Zustand nirgends mit der elektrischen Leitung in Kontakt.

Allerdings ist es durchaus möglich, durch die Wandung des Innenkörpers hindurch Durchgangsöffnungen vorzusehen, durch welche hindurch das Spritzmaterial in den Innenraum des Innenkörpers und damit bis zu der elektrischen Leitung vordringen kann:
Zum einen dient dies einer mechanisch verbesserten Verbindung zwischen Spritzkörper und Innenkörper, zum anderen kann durch Größe und Anzahl der Durchgangsöffnungen festgelegt werden, wieviel Spritzmaterial und wie schnell bis zu der elektrischen Leitung vordringen kann:
Denn wenn die Durchgangsöffnungen entsprechend klein sind, kühlt sich das Spritzmaterial auf dem Weg durch die kleinen Durchgangsöffnungen hindurch bereits so weit ab, dass ein Anschmelzen der Isolierung der elektrischen Leitung nicht mehr befürchtet werden muss, da die Temperatur des Spritzmaterials bereits abgesunken ist und/oder auch die Masse an Spritzmaterial, welches die elektrische Leitung erreicht, so gering ist, dass die darin enthaltene Wärmemenge zum Anschmelzen der Isolierung kaum mehr ausreicht.

Der Durchmesser der Durchgangsöffnungen beträgt deshalb zwischen **0,8** mm und **1,5** mm und/oder zwischen dem **1,0**-fachen und **3,0**-fachen des Durchmessers des Durchlasses in einer Querwand.

Falls solche Durchgangsöffnungen in den Wänden vorhanden sind, dürfen sich diese natürlich nicht in dem Endbereich des Innenraumes zu den freien Enden des Innenkörpers, insbesondere demjenigen freien Ende, durch das hindurch ein Kabelaustritt erfolgt, vorhanden sein, denn sonst könnte hier wiederum Spritzmaterial aus der Form in axialer Richtung entlang der elektrischen Leitung austreten.

Deshalb ist - vorzugsweise bei Vorhandensein der Durchgangsöffnungen in den Wandungen des Innenkörpers - im Innenkörper vom freien Ende zurück versetzt jeweils eine Querwand vorhanden, und in dem Bereich in Längsrichtung außerhalb der Querwände ist keine Durchgangsöffnung in der Wand des Innenkörpers mehr vorhanden.

Der Abstand der Querwand vom Leitungsaustritt beträgt dabei mindestens 15 mm, besser mindestens 20 mm und/oder in Relation zur größten Querschnittserstreckung des Durchlasses in der Querwand mindestens das **20**fache, besser mindestens das **30**fache dieser größten Querschnittserstreckung.

Der Innenraum zwischen den Querwänden kann ferner durch weitere Zwischenwände in mehrere einzelne Kammern unterteilt werden, einerseits um im Fall von Durchgangsöffnungen das Einströmen von Material in diese Kammern separat steuern zu können, vor allem aber um in den Zwischenwänden entsprechende Durchlässe anzuordnen, in welche die elektrische Leitung eingelegt wird und durch diese positioniert wird. Diese Durchlässe sind vorzugsweise vom Querschnitt her leicht hinterschnitten, sodass die darin eingelegte elektrische Leitung darin verrastet.

Bei einem gekröpften Spritzkörper ist eine solche Zwischenwand zumindest im Bereich der Kröpfung vorhanden.

Bei einem aus zwei Halbschalen bestehenden Innenkörper und zwei herausführenden elektrischen Leitungen wird vorzugsweise in jede der Halbschalen eine elektrische Leitung eingelegt.

Der Innenkörper ist vorzugsweise auch auf seiner Außenseite dreidimensional strukturiert und besitzt beispielsweise Aufwölbungen nach außen oder Einbuchtungen nach innen, die einer guten Verhakung mit dem umgebenden Spritzkörper dienen sollen.

Die Positionierung des Innenkörpers in der Spritzform wird formschlüssig vorgenommen, indem beispielsweise in der Außenfläche des Innenkörpers Sackloch-Vertiefungen vorhanden sind, in die Positioniervorsprünge der Spritzform für den Spritzkörper eingreifen und dadurch den Innenkörper in der Spritzform positionieren.

Vorzugsweise wird der Innenkörper aus einem Material bestehen, dessen Schmelzpunkt höher liegt als der Schmelzpunkt des Materials des Spritzkörpers, damit ein Anschmelzen des Innenkörpers beim Spritzen des Spritzkörpers nicht erfolgt.

Zur Erhöhung der Stabilität des Spritzkörpers kann zusammen mit dem Innenkörper auch ein zusätzliches Versteifungselement, insbesondere aus Metall bestehend, im Spritzkörper vorhanden sein und zusammen mit dem Innenkörper mit umspritzt werden.

Ein derartiger Spritzkörper ist für unterschiedliche Anwendungen vorstellbar, beispielsweise als Stecker am Ende eines elektrischen Kabels.

Für andere Anwendungen kann es sinnvoll sein, den Spritzkörper und den Innenkörper aus durchsichtigem Material herzustellen, jedoch den Innenkörper bereichsweise mit einer lichtundurchlässigen Beschichtung zu bedecken und an den belassenen lichtdurchlässigen Bereichen des Innenkörpers eine elektrische Lichtquelle an der elektrischen Leitung vorzusehen, beispielsweise eine Leuchtdiode.

Die genannte Aufgabe wird hinsichtlich der Vorgehensweise gelöst, die darin besteht, dass zunächst separat der Innenkörper hergestellt wird, beispielsweise ebenfalls mittels Spritzgießen, und danach die elektrische Leitung von diesem vorgefertigten Innenkörper so umgeben wird, dass die Leitung diesen Innenkörper an wenigstens einem Leitungsaustritt verlässt.

Anschließend wird dieser Innenkörper samt der eingelegten elektrischen Leitung so in die Spritzform für den Spritzkörper eingelegt, dass der Innenkörper zumindest mit dem Leitungsaustritt aus der Spritzform vorsteht, also die Spritzform lediglich gegenüber dem Innenkörper abdichten muss und nicht direkt gegenüber der elektrischen Leitung. In diesem Zustand wird der Innenkörper mit dem Spritzkörper umspritzt.

Wenn der Innenkörper aus zwei Halbschalen besteht, wird die eine oder die mehreren elektrischen Leitungen in den hohlen Innenraum, insbesondere dieser beiden Halbschalen, eingelegt und dann die beiden Halbschalen gegeneinander gelegt und insbesondere gegeneinander verrastet, sodass eine stabile, leicht handhabbare Einheit entsteht. Falls in diesem Fall zwei elektrische Leitungen benötigt werden, was der häufigste Fall ist, wird in jede Halbschale ein elektrischer Leiter eingelegt.

Falls gewünscht, wird beim Umspritzen des Innenkörpers mit dem Spritzkörper das Vordringen des flüssigen Kunststoffes bis in den Hohlraum im Inneren des Innenkörpers ermöglicht, insbesondere durch entsprechende Anordnung und Dimensionierung von wenigstens einer Durchgangsöffnung in der Wandung des Innenkörpers.

Um den Innenkörper formschlüssig in der Spritzform zu positionieren und ein Verrutschen des Innenkörpers beim Spritzen des Spritzkörpers zu vermeiden, wird der Innenkörper vorzugsweise mit Sackloch-Bohrungen in seiner Außenseite auf Positioniervorsprünge der Spritzgussform aufgesteckt.

### c) Ausführungsbeispiele

Ausführungsformen gemäß der Erfindung sind im Folgenden beispielhaft näher beschrieben. Es zeigen:
- Fig. **1**a) - c):: den fertigen Spritzkörper in unterschiedlichen Ansichten und im Teilschnitt,
- Fig. **2**a),b): den fertigen Spritzkörper im Längsschnitt und im vergrößerten Querschnitt und
- Fig. **3**a): eine Halbschale des Innenkörpers in der Aufsicht und

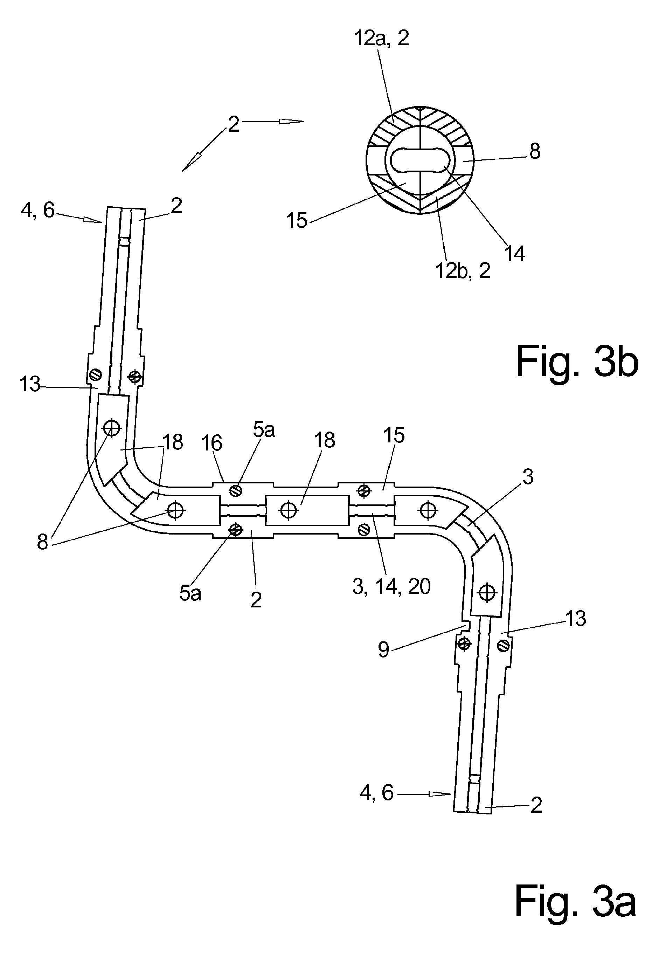

- Fig. **3**b): einen vergrößerten Querschnitt des Innenkörpers.

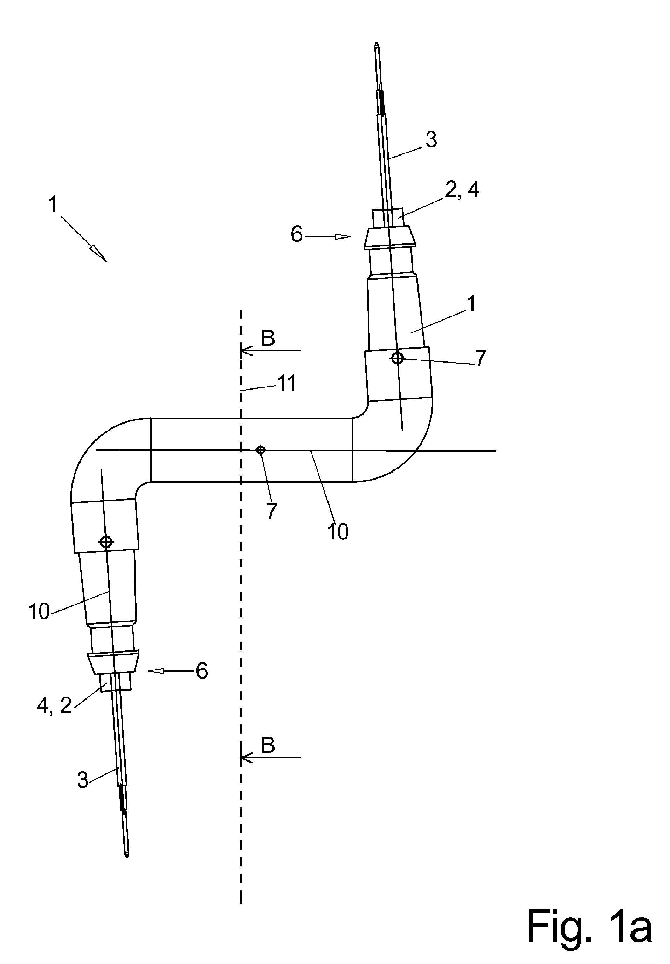

Fig. 1a zeigt den fertigen Spritzkörper 1, der in diesem Fall eine längliche, Z-förmige Gesamtkontur besitzt, wobei mit der Bezugsziffer **10** die Verlaufsrichtung dieses länglichen Spritzkörpers **1** bezeichnet ist.

An beiden Enden des Spritzkörpers **1** steht aus ihm jeweils eine elektrische Leitung **3** vor, die sich im Inneren durch den gesamten Spritzkörper **1** hindurch erstreckt.

Der Spritzkörper **1** ist auf der Außenseite entsprechend dem vorgesehenen Verwendungszweck nach Belieben konturiert.

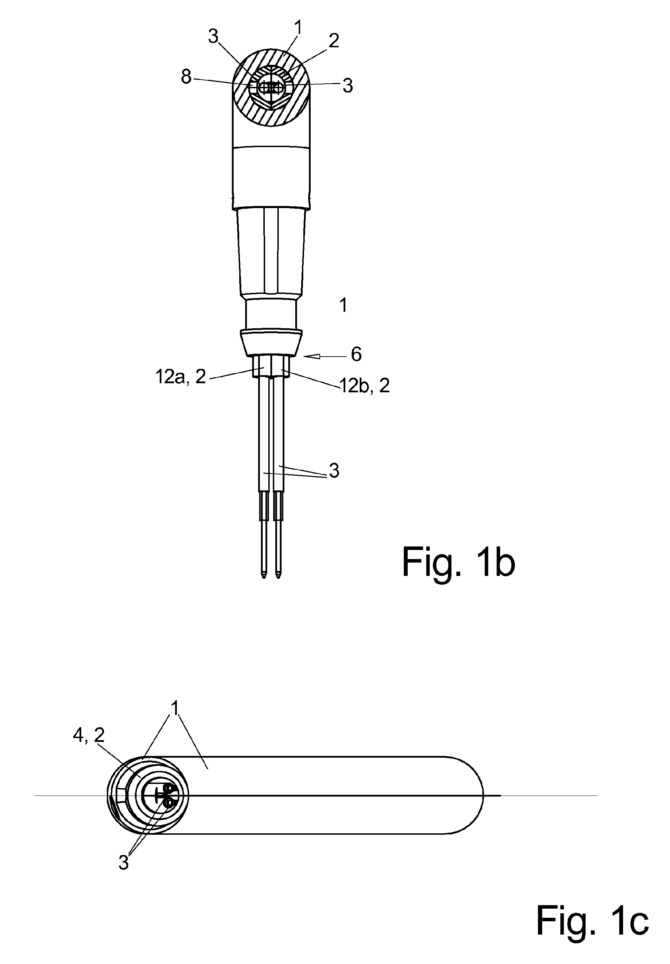

Wie besser anhand der Fig. **1**b und **1**c ersichtlich, treten im vorliegenden Fall aus jedem Ende des Spritzkörpers **1** zwei elektrische Leitungen **3** aus. Ferner ist dort erkennbar, dass aus dem jeweiligen freien stirnseitigen Ende des äußeren Spritzkörpers **1,** an der Austrittsstelle **6,** ein Innenkörper **2** vorsteht, der in diesem Fall aus zwei Halbschalen **12**a, b besteht.

Diese Figuren zeigen bereits den ersten erfindungsgemäßen Vorteil, dass nämlich die - in den **Fig. 1a-c** nicht eingezeichnete - Spritzform beim Herstellen des Spritzkörpers **1** nicht gegenüber den elektrischen Leitungen **3** direkt abdichten muss, sondern lediglich gegenüber dem Außenumfang des an der Austritts-Stelle **6** später aus dem Spritzkörper austretenden Innenkörper **2,** der in Querschnittsrichtung wesentlich stabiler und nicht so elastisch ist wie die elektrischen Leitungen **3.**

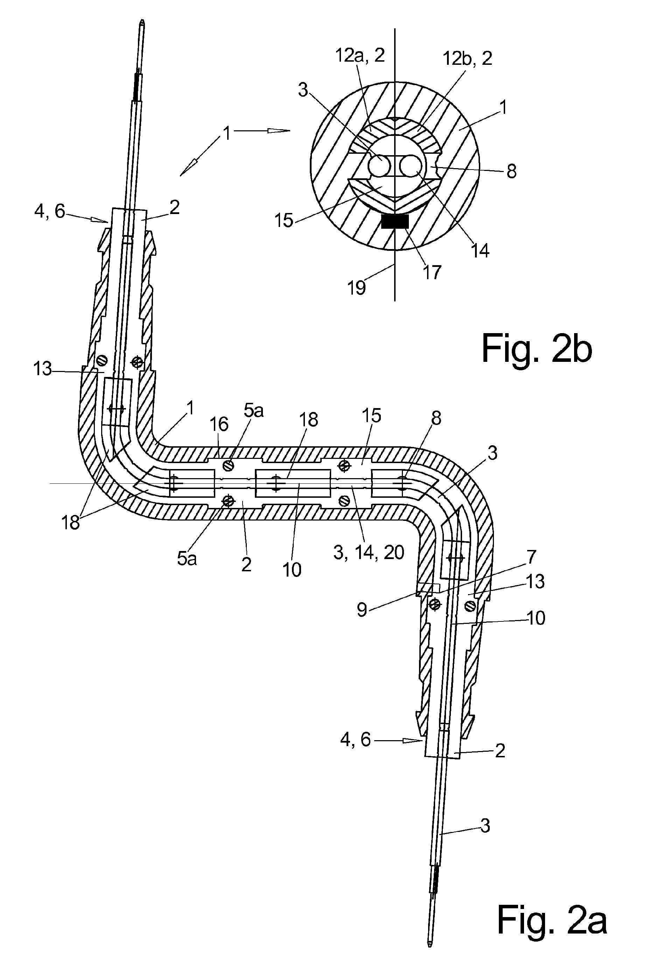

Im Längsschnitt der **Fig. 2a** und im Querschnitt der **Fig. 2b** durch den Spritzkörper **1** ist ferner zu erkennen, dass sich dieser Innenkörper **2** in Längsrichtung, also der Verlaufsrichtung **10,** im Inneren entlang des gesamten äußeren Spritzkörpers **1** erstreckt und beidseits aus diesem vorsteht, und der Innenkörper **2** in Umfangsrichtung, also im Querschnitt betrachtet, von dem äußeren Spritzkörper **1** vollständig umgeben ist.

Eine Ausnahme stellen hier höchstens die Sackloch-Vertiefungen **7** in der Außenfläche des Spritzkörpers **1** dar, die sich in die Tiefe bis auf den vorgefertigten Innenkörper **2** erstrecken, und dessen Positionierung in der Spritzform für den äußeren Spritzkörper **1** während des Spritzvorganges dienen.

Diese Sackloch-Vertiefungen **7** entstehen durch Positioniervorsprünge **9,** die aus der Innenfläche der nicht dargestellten Spritzform nach innen vorstehen und den Innenkörper **2** kontaktieren und vorzugsweise formschlüssig positionieren, beispielsweise indem in diesem Bereich in der Außenfläche des Innenkörpers **2** zusätzlich eine Positioniervertiefung vorhanden ist, in die der Positioniervorsprung **9** der Spritzform, der auch rückziehbar bezüglich der Spritzform ausgebildet sein kann, formschlüssig hineinragt.

Der Längsschnitt der **Fig. 2a** zeigt zum einen, dass die Außenfläche des Innenkörpers **2 -** insbesondere ringförmig umlaufend - konturiert ist, also vorstehende und zurückversetzte Bereiche aufweist, vor allem um eine möglichst gute Verbindung und Verhakung mit dem außen angespritzten Spritzkörper **1** und damit eine hohe mechanische Stabilität zu erreichen.

Die mechanische Stabilität kann weiter dadurch verbessert werden, dass zusammen mit dem vorgefertigten Spritzkörper **2** in die Spritzform für den äußeren Spritzkörper **1** auch ein Versteifungselement **17** in Form z. B. eines Flachmaterials z.B. aus Metall mit eingelegt und mit umspritzt wird, wie in der Querschnittsdarstellung der Fig. **2**b ersichtlich.

Ferner ist zu erkennen, dass der Innenkörper **2** einen Innenraum **20** aufweist, der in diesem Fall ebenfalls in Längsrichtung **10** wie die elektrische Leitung **3** den Innenkörper **2** in seiner ganzen Länge durchläuft, im Querschnitt betrachtet in Umfangsrichtung jedoch vollständig oder zumindest im Wesentlichen von der Wandung des Innenkörpers **2** umgeben ist, wie am besten in der Einzeldarstellung der **Fig. 3b** und **3a** des Innenkörpers **2** zu erkennen.

Dieser Innenraum **20** dient zum Unterbringen der einen oder mehreren elektrischen Leitungen **3,** und muss für diesen Zweck ausreichend dimensioniert sein. Sofern die elektrische Leitung den Innenkörper **2** nur über einen Teil seiner Erstreckung durchdringt, muss auch der Innenraum **20** nur in diesem Bereich, in dem die elektrischen Leitungen **3** vorhanden sind, gegeben sein.

Wie die **Fig. 2a** und **3a** erkennen lassen, ist der Innenraum **20** in Verlaufsrichtung **10** nicht immer gleich groß, sondern Kammern **18** mit relativ großem Querschnitt werden in Längsrichtung voneinander getrennt durch Zwischenwände **15,** in denen der Innenraum **20** im Querschnitt sehr viel geringer ist und gerade noch so groß, dass die eine oder mehreren elektrischen Leitungen **3** darin Platz finden.

Wie vor allem die Querschnittsdarstellungen der **Fig. 2b** und **3b** zeigen, ist der hierfür in den Zwischenwänden **15** vorhandene Durchlass **14** so klein, dass der Querschnitt der einen oder mehreren elektrischen Leitungen **3** gerade darin Platz findet.

Diese Querschnittsdarstellungen zeigen ferner, dass im vorliegenden Fall der Innenkörper **2** aus zwei Halbschalen **12**a, b besteht, die sich jeweils über die gesamte Länge in Verlaufsrichtung **10** des Innenkörpers **2** erstrecken, und nach dem Einlegen der elektrischen Leitungen **3** über Rastvorsprünge und dazu passende Rastvertiefungen als Rastvorrichtung **5**a, b (wovon im Längsschnitt der Figur **2**a nur die Rastvorrichtungen **5**a sichtbar sind) gegeneinander verrastet werden können, um eine gut handhabbare Einheit einschließlich der vorher bereits eingelegten elektrischen Leitungen **3** zu bilden.

Da im vorliegenden Fall zwei elektrische Leitungen **3** vorhanden sind, ist in den Querwänden **13** jeder der beiden Halbschalen **12**a, b jeweils ein Durchlass **14** vorhanden, der zur Kontaktebene **19** zwischen den beiden Halbschalen **12**a, b hin offen ist und einen leicht hinterschnittenen Querschnitt aufweist, in den jeweils eine elektrische Leitung **3** gerade hineingedrückt werden kann, und dadurch in dem hinterschnittenen Querschnitt des Durchlasses **14** verrastet und somit formschlüssig positioniert ist.

Die in Verlaufsrichtung **10** letzte Zwischenwand wird als Querwand **13** bezeichnet, und erstreckt sich vorzugsweise in Längsrichtung **10** über eine wesentlich größere Distanz als die Zwischenwände **15,** nämlich von der letzten Kammer **18** in Verlaufsrichtung **10** bis zum stirnseitigen Ende des Innenkörpers **2.** In diesem gesamten Bereich ist der Innenraum **20** möglichst so gering gehalten, dass er von den einzulegenden elektrischen Leitungen **3** möglichst vollständig ausgefüllt wird. Falls in einem Endbereich keine Leitungen **3** vorhanden sind, ist hier auch kein Innenraum **20** vorhanden.

Die elektrischen Leitungen sind somit gut geschützt von dem umgebenden Innenkörper **2,** wenn sie gemeinsam mit diesem in die Spritzform zum Herstellen des äußeren Spritzkörpers **1** eingelegt und umspritzt werden.

Das Spritzmaterial beim Spritzen des Spritzkörpers **1** erreicht - sofern dies gewünscht wird - den Innenraum **20** des Innenkörpers **2** und damit ggf. die elektrische Leitung **3** nur dann, wenn in der Wandung des Innenkörpers **2** eine oder mehrere Durchgangsöffnungen **8** vorhanden sind, wie beispielsweise in **Fig. 3b** auf der linken Seite oder in **Fig. 2b** auf beiden Seiten des Innenkörpers **2** dargestellt.

Ob und wie stark sich der Innenraum **20** dabei mit Spritzmaterial füllt, hängt von der Dimensionierung dieser Durchgangsöffnungen **8** ab.

Bei der zuvor beschriebenen Unterteilung des Innenraumes **20** in breitere Kammern **18** und schmalere Durchlässe **14** in den Zwischenwänden **15** sind die Durchgangsöffnungen **8** vorzugsweise nur im Bereich der Kammern **18** angeordnet.

### BEZUGSZEICHENLISTE

- 1: Spritzkörper
- 2: Innenkörper
- 3: Leitung, elektrische Leitung
- 4: Leitungs-Austritt
- **5**a,b: Rastvorrichtung
- **6**: Austrittsstelle
- **7**: Sackloch-Vertiefung
- **8**: Durchgangsöffnung
- **9**: Positioniervorsprung
- **10**: Längsrichtung, Verlaufsrichtung
- **11**: Querschnittsrichtung
- **12**a,b: Halbschale
- **13**: Querwand
- **14**: Durchlass
- **15**: Zwischenwand
- **16**: Aufwölbung
- **17**: Versteifungselement
- **18**: Kammer
- **19**: Kontaktebene
- **20**: Innenraum

## Patentansprüche

1. Spritzkörper **(1)** mit wenigstens einer herausgeführten elektrischen Leitung **(3)**
**dadurch gekennzeichnet, dass**
- der Spritzkörper **(1)** auf einem Innenkörper **(2)** aufgespritzt ist,
- in den vorgefertigten Innenkörper **(2)** die Leitung **(3)** eingelegt ist,
- der Innenkörper **(2)** die Leitung umgibt, die den Innenkörper **(2)** an wenigstens einem Leitungs-Austritt **(4)** verlässt,
- der Innenkörper **(2)** zumindest mit dem Leitungs-Austritt **(4)** aus dem Spritzkörper **(1)** vorsteht.

2. Spritzkörper **(1)** nach Anspruch **1,**
**dadurch gekennzeichnet, dass**
- der Spritzkörper **(1)** aus Kunststoff besteht, und/oder
- der Innenkörper **(2)** aus zwei separaten oder über Filmscharnier verbundenen Halbschalen **(12a,** b) besteht.

3. Spritzkörper **(1)** nach einem der vorhergehenden Ansprüche, **dadurch gekennzeichnet, dass**
- die Halbschalen **(12a,** b) zusammenwirkende Rastvorrichtungen **(5a,** b) aufweisen und im montierten Zustand gegeneinander verrastet sind, und/oder
- der Innenkörper **(2)** an der Austrittsstelle **(6)** aus dem Spritzkörper **(1)** in Querschnittsrichtung **(11)** so stabil ausgebildet ist, dass er sich nicht auf der radial innenliegenden elektrischen Leitung **(3)** abstützt.

4. Spritzkörper **(1)** nach einem der vorhergehenden Ansprüche, **dadurch gekennzeichnet, dass**
wenigstens der Bereich des Leitungsaustritts **(4)** durch eine Querwand **(13)** im Innenkörper **(2)** abgetrennt ist vom übrigen Innenraum **(20)** des Innenkörpers **(2),** und in der Querwand **(13)** lediglich ein so großer Durchlass **(14)** vorhanden ist, dass er die wenigstens eine elektrische Leitung **(3)** gerade aufnehmen kann und der Durchlass **(14)** insbesondere einen hinterschnittenen Querschnitt aufweist.

5. Spritzkörper **(1)** nach einem der vorhergehenden Ansprüche, **dadurch gekennzeichnet, dass**
- der Innenkörper **(2)** auf der Außenseite Sackloch-Vertiefungen **(7)** aufweist zum Anlegen von Positioniervorsprüngen **(9)** der Spritzform und/oder
- der Innenkörper **(2)** Durchgangsöffnungen **(8)** von der Außenseite zur Innenseite aufweist für das Vordringen von Spritzmaterial des Spritzkörpers **(1)** ins Innere des Innenkörpers **(2),** jedoch nicht im Bereich außerhalb der Querwand **(13).**

6. Spritzkörper **(1)** nach einem der vorhergehenden Ansprüche, **dadurch gekennzeichnet, dass**
- der Abstand der Querwand **(13)** von dem Leitungsaustritt **(4)** aus dem Innenkörper **(2)** mindestens **15** mm, besser mindestens **20** mm, beträgt, und/oder
- der Abstand der Querwand **(13)** von dem Leitungsaustritt **(4)** aus dem Innenkörper **(2)** mindestens dem **20**-fachen, besser mindestens dem **30**-fachen der größten Querschnittserstreckung des Durchlasses in der Querwand **(13)** beträgt.

7. Spritzkörper **(1)** nach einem der vorhergehenden Ansprüche, **dadurch gekennzeichnet, dass**
- der Innenraum **(20)** zwischen den jeweils letzten Querwänden **(13)** durch weitere Zwischenwände **(15)** unterteilt ist in einzelne Kammern, und in den Zwischenwänden **(15)** Durchlässe **(8)** für wenigstens eine elektrische Leitung **(3)** vorhanden sind, und insbesondere in jeder Kammer eine Durchgangsöffnung **(8)** vorhanden ist
- der Innenkörper **(2)** und der Spritzkörper **(1)** aus dem gleichen Material bestehen.

8. Spritzkörper **(1)** nach einem der vorhergehenden Ansprüche, **dadurch gekennzeichnet, dass**
- der Innenkörper **(2)** im Bereich der Querwände **(13)** und/oder der Zwischenwände **(15)** eine Aufwölbung **(16)** nach außen aufweist, und/oder
- der Innenkörper **(2)** aus einem Material besteht, dessen Schmelzpunkt höher liegt als die Einspritztemperatur des Materials des Spritzkörpers (**1**).

9. Spritzkörper **(1)** nach einem der vorhergehenden Ansprüche, **dadurch gekennzeichnet, dass**
- der Durchmesser der Durchgangsöffnung **(8)** zwischen **0,8** mm und **1,5** mm beträgt, und/oder
- der Durchmesser der Durchgangsöffnung **(8)** zwischen dem **1,0**-fachen und **3,0**-fachen des Durchmessers des Durchlasses **(14)** in der Querwand **(13)** beträgt.

10. Spritzkörper **(1)** nach einem der vorhergehenden Ansprüche, **dadurch gekennzeichnet, dass**
im Spritzkörper **(1)** und insbesondere parallel zu dem Innenkörper **(2)** ein Versteifungselement **(17),** insbesondere aus Metall, angeordnet ist.

11. Spritzkörper **(1)** nach einem der vorhergehenden Ansprüche, **dadurch gekennzeichnet, dass**
bei einem gekröpften Spritzkörper der Innenkörper **(2)** im Bereich der Kröpfung eine Zwischenwand aufweist.

12. Spritzkörper **(1)** nach einem der vorhergehenden Ansprüche, **dadurch gekennzeichnet, dass**
der Spritzkörper **(1)** ein Stecker ist.

13. Spritzkörper **(1)** nach einem der vorhergehenden Ansprüche, **dadurch gekennzeichnet, dass**
der Spritzkörper **(1)** aus durchsichtigem Material besteht und der Innenkörper **(2)** aus einem durchsichtigen Material besteht, welches bereichsweise von einer lichtundurchlässigen Beschichtung, insbesondere einem Lack, bedeckt ist und insbesondere im Inneren des Innenkörpers **(2)** eine elektrische Lichtquelle, insbesondere eine Leuchtdiode, angeordnet ist.

14. Verfahren zum Herstellen eines Spritzkörpers **(1)** mit wenigstens einer herausgeführten elektrischen Leitung **(3),**
**dadurch gekennzeichnet, dass**
- ein Innenkörper **(2)** hergestellt wird, insbesondere mittels Spritzgießen,
- die elektrische Leitung **(3)** mit dem vorgefertigten Innenkörper **(2)** so umgeben wird, dass die Leitung **(3)** den Innenkörper **(2)** an wenigstens einem Leitungs-Austritt **(4)** verlässt,
- der Innenkörper **(2)** mit der elektrischen Leitung **(3)** in eine Spritzform so eingelegt wird, dass der Innenkörper **(2)** zumindest mit dem Leitungs-Austritt **(4)** aus der Spritzform vorsteht und
- der Innenkörper **(2)** mit dem Spritzkörper **(1)** umspritzt wird.

15. Verfahren nach einem der vorhergehenden Verfahrensansprüche, **dadurch gekennzeichnet, dass**
- die elektrische Leitung **(3)** im dem hohlen Innenraum des vorgefertigten Innenkörpers **(2)** eingelegt wird und insbesondere die beiden Halbschalen **(12a,** b) des Innenkörpers **(2)** gegeneinander gelegt und insbesondere gegeneinander verrastet werden, und/oder
- bei zwei elektrischen Leitungen **(3)** und einem Innenkörper **(2)** aus zwei Halbschalen **(12a** ,b) in jede Halbschale ein elektrischer Leiter eingelegt und insbesondere verrastet wird.

16. Verfahren nach einem der vorhergehenden Verfahrensansprüche, **dadurch gekennzeichnet, dass**
- beim Umspritzen mit dem Spritzkörper **(1)** dem flüssigen Kunststoff das Vordringen bis in den Hohlraum des Innenkörpers ermöglicht wird, und/oder
- der Innenkörper **(2)** in der Spritzform formschlüssig positioniert wird, insbesondere der Innenkörper **(2)** mit Sackloch-Öffnungen **(7)** in seiner Außenseite auf Positioniervorsprünge der Spritzgussform aufgesteckt wird.
